# EUROPEAN PATENT APPLICATION

(11) **EP 4 075 559 A1**
(43) Date of publication of application: **19.10.2022**
(21) Application number: 21867909.0
(22) Date of filing: 20.02.2021
(51) Int. Cl.: H01M 10/0567, H01M 10/0569

(54) **ELECTROLYTE AND ELECTROCHEMICAL DEVICE COMPRISING SAME, AND ELECTRONIC DEVICE**

(71) Applicant: Ningde Amperex Technology Ltd., Ningde City, Fujian 352100 (CN)
(72) Inventor: ZHOU, Shaoyun, Ningde City Fujian 352100 (CN); TANG, Chao, Ningde City Fujian 352100 (CN)
(74) Representative: Klunker IP Patentanwälte PartG mbB
(86) International application number: PCT/CN2021/077035
(87) International publication number: WO 2022/174412

(57) **Abstract**

This application relates to an electrolyte, and an electrochemical apparatus and an electronic apparatus containing the same. The electrolyte includes ethyl propionate and fluoroethylene carbonate, where based on a total weight of the electrolyte, a weight percentage of ethyl propionate is a%, and a weight percentage of fluoroethylene carbonate is b%, and 0<a≤10 and 0.01<b/a≤0.5 are satisfied. The electrochemical apparatus including the electrolyte has good high-temperature performance and low-temperature performance and good cycling performance.

## Description

### TECHNICAL FIELD

This application relates to the field of energy storage technologies, and in particular, to an electrolyte, and an electrochemical apparatus and an electronic apparatus containing the same.

### BACKGROUND

Electrochemical apparatuses such as lithium-ion batteries have advantages such as high voltage, high capacity, long life, and no memory effect, and therefore have been widely applied in the fields such as digital products and electric vehicles. In addition, as they are applied to increasing fields and used in increasing geographic areas and environments and increasingly complicated application scenarios, higher performance requirements are in turn imposed on the lithium-ion batteries, for example, wider operating temperature range and longer cycle life. Electrolyte is an important part of a lithium-ion battery. Adjustment of the electrolyte alone can effectively improve partial performance of the lithium-ion battery, such as cycling performance, high-temperature performance or low-temperature performance, but have difficulty in comprehensively ensuring both cycling performance and high- temperature performance and low-temperature performance.

Currently, a focus of research and development in the battery field is on how to ensure both high-temperature performance and low-temperature performance and cycling performance of lithium-ion batteries.

### SUMMARY

This application provides an electrolyte and an electrochemical apparatus containing the same in an attempt to resolve at least one problem in the related field to at least some extent.

This application provides an electrolyte, including ethyl propionate and fluoroethylene carbonate, where based on a total weight of the electrolyte, a weight percentage of ethyl propionate is a%, and a weight percentage of fluoroethylene carbonate is b%, 0<a≤10 and 0.01<b/a≤0.5.

In some embodiments, 4≤a+b≤15.

In some embodiments, the electrolyte further includes at least one of 1,3-propane sultone or unsaturated cyclic carbonate.

In some embodiments, when the electrolyte includes 1,3-propane sultone, based on the total weight of the electrolyte, a weight percentage of 1,3-propane sultone is c%, and 0.25≤c/b≤5; and when the electrolyte includes the unsaturated cyclic carbonate, based on the total weight of the electrolyte, a weight percentage of the unsaturated cyclic carbonate is d%, and at least one of 1≤b+d≤6 or 0.25≤d/b≤6.5 is satisfied.

In some embodiments, unsaturated cyclic carbonate includes at least one of vinylene carbonate or vinyl ethylene carbonate.

In some embodiments, the electrolyte further includes a dinitrile compound, and the dinitrile compound includes at least one of adiponitrile, succinonitrile, or ethylene glycol bis(2-cyanoethyl) ether, where based on the total weight of the electrolyte, a weight percentage of the dinitrile compound is e%, e≤2 and e/b≥0.3.

In some embodiments, the electrolyte further includes a trinitrile compound, and the trinitrile compound includes at least one of 1,3,6-hexanetricarbonitrile or 1,2,3-tris (2-cyanoethoxy) propane, where based on the total weight of the electrolyte, a weight percentage of the trinitrile compound is f%, f<2.5.

In some embodiments, the electrolyte further includes a boron-containing lithium salt, and the boron-containing lithium salt includes at least one of lithium difluoroacetate borate, lithium bisoxalate borate, lithium tetrafluoroborate, or lithium tetraborate, where based on the total weight of the electrolyte, a weight percentage of the boron-containing lithium salt is g%, g<1.

In some embodiments, the electrolyte further includes a propynyl compound, and the propynyl compound includes at least one of prop-2-ynyl imidazole-1-carboxylate or carbonic acid methyl 2-propynyl ester, where based on the total weight of the electrolyte, a weight percentage of the propynyl compound is h%, h<1.

This application further provides an electrochemical apparatus, where the electrochemical apparatus includes a positive electrode, a negative electrode, a separator, and any one of the electrolytes.

In some embodiments, the positive electrode includes a positive electrode current collector and a positive electrode active material layer applied on the positive electrode current collector, and the positive electrode active material layer includes a positive electrode active material, where a compacted density of the positive electrode active material layer is x g/cm³, 0.5≤a/x≤3.

In some embodiments, a particle size D₅₀ of the positive electrode active material is y µm, 0.1≤y/b≤100.

This application further provides an electronic apparatus, including any one of the foregoing electrochemical apparatuses.

Additional aspects and advantages of the embodiments of this application are partially described and presented in subsequent descriptions, or explained by implementation of the embodiments of this application.

### DESCRIPTION OF EMBODIMENTS

Embodiments of this application are described in detail below. The embodiments described herein are illustrative in nature, and used to provide a basic understanding of this application. The embodiments of this application shall not be construed as a limitation on this application.

The terms "about", "roughly", "substantially", and "approximately" used herein are intended to describe and represent small variations. When used in combination with an event or a circumstance, the term may refer to an example in which the exact event or circumstance occurs or an example in which an extremely similar event or circumstance occurs. For example, when used in combination with a numerical value, the term may refer to a variation range of less than or equal to ±10% of the numerical value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two numerical values is less than or equal to ±10% of an average numerical value of the numerical values (for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), the two numerical values may be considered "roughly" the same.

In addition, quantities, ratios, and other numerical values are sometimes presented in the format of ranges in this specification. It should be understood that such range formats are used for convenience and simplicity and should be flexibly understood as including not only numerical values clearly designated as falling within the range but also all individual numerical values or sub-ranges covered by the range as if each numerical value and sub-range are clearly designated.

In the specific embodiments and claims, an item list connected by the terms "at least one of", "at least one piece of", "at least one kind of" or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

Some embodiments of this application relate to an electrochemical apparatus, where the electrochemical apparatus includes a positive electrode, a negative electrode, a separator, and an electrolyte. In some embodiments, the electrochemical apparatus is a lithium-ion battery.

Ethyl propionate (EP) has characteristics of low viscosity and low melting point, which can effectively improve infiltration of the electrolyte to the electrochemical apparatus and low-temperature performance of the electrochemical apparatus, but has a relatively low boiling point and relatively low oxidation resistance to the positive electrode. Adding too much ethyl propionate affects the high-temperature performance and the cycling performance of the electrochemical apparatus.

Fluoroethylene carbonate (FEC) can form an excellent solid electrolyte interface (SEI) film on the negative electrode, which overcomes the impact of ethyl propionate on the cycling performance of the electrochemical apparatus to some extent. However, thermal stability of fluoroethylene carbonate at high temperatures is not good either.

The inventor finds that it is conducive to ensure both high-temperature performance and low-temperature performance and cycling performance of the battery by controlling an amount of ethyl propionate and further controlling a total amount of ethyl propionate and fluoroethylene carbonate.

In this application, both the cycling performance and high-temperature performance and low-temperature performance are ensured by controlling an amount of ethyl propionate in the electrolyte and optimizing a ratio of fluoroethylene carbonate to ethyl propionate. In this application, an electrochemical apparatus with both cycling performance and high- and low-temperature performance ensured can be implemented.

### I. Electrolyte

The electrolyte according to this application includes ethyl propionate and fluoroethylene carbonate, where based on the total weight of the electrolyte, a weight percentage of ethyl propionate is a%, and a weight percentage of fluoroethylene carbonate is b%, 0<a≤10 and 0.01<b/a≤0.5.

In some embodiments, a is about 1, about 2, about 3, about 4, about 5, about 6, about 7, about 8, about 9, or about 10, or falls within a range defined by any two of the preceding numerical values, for example, from about 1 to about 5, from about 3 to about 10, or from about 5 to about 10.

In some embodiments, b/a is about 0.05, about 0.1, about 0.15, about 0.2, about 0.25, about 0.3, about 0.35, about 0.4, about 0.45, about 0.5, or falls within a range defined by any two of the preceding numerical values, for example, from about 0.05 to about 0.2, from about 0.1 to about 0.2, from about 0.05 to about 0.5, or from about 0.1 to about 0.5.

In some embodiments, the electrolyte further satisfies 4≤a+b≤15. In some embodiments, a+b is about 4, about 4.5, about 5, about 5.5, about 6, about 6.5, about 7, about 7.5, about 8, about 8.5, about 9, about 9.5, about 10, about 10.5, about 11, about 11.5, about 12, about 12.5, about 13, about 13.5, about 14, about 14.5, or about 15, or falls within a range defined by any two of the preceding numerical values, for example, from about 4 to about 11, from about 4 to about 9.5, or from about 5 to about 9.5. When a total amount of ethyl propionate and fluoroethylene carbonate is controlled within a specified interval (4≤a+b≤15), the infiltration of the electrolyte to the electrochemical apparatus can be ensured, the cycling performance and the high-temperature performance of the electrochemical apparatus can be satisfied.

In some embodiments, the electrolyte further includes at least one of 1,3-propane sultone (PS) or unsaturated cyclic carbonate, to further improve the cycling performance and the high-temperature performance of the electrochemical apparatus. In some embodiments, the electrolyte includes 1,3-propane sultone. In some embodiments, the electrolyte includes unsaturated cyclic carbonate. In some embodiments, the electrolyte further includes 1,3-propane sultone and unsaturated cyclic carbonate.

In some embodiments, the electrolyte includes 1,3-propane sultone. 1,3-propane sultone can further improve the high-temperature performance of the electrochemical apparatus, but may affect the impedance of the electrochemical apparatus, thereby affecting the low-temperature performance of the electrochemical apparatus.

In some embodiments, based on the total weight of the electrolyte, a weight percentage of 1,3-propane sultone is c%, and 0.1≤c≤3 is satisfied. In some embodiments, c is about 0.1, about 0.25, about 0.3, about 0.5, about 0.8, about 1, about 1.5, about 2, or about 3, or falls within a range defined by any two of the preceding numerical values, for example, from about 0.1 to about 2, from about 0.25 to about 3, or from about 0.5 to about 3.

In some embodiments, based on the total weight of the electrolyte, a weight percentage of 1,3-propane sultone is c%, 0.25≤c/b≤5. In some embodiments, c/b is about 0.25, about 0.3, about 0.5, about 0.8, about 1, about 1.5, about 2, about 3, about 4, or about 5, or falls within a range defined by any two of the preceding numerical values, for example, from about 0.25 to about 1, from about 0.3 to about 1.5, from about 0.5 to about 2, or from about 1 to about 5. The electrolyte satisfying 0.25≤c/b≤5 may further improve the high-temperature performance of the electrochemical apparatus while ensuring the low-temperature performance of the electrochemical apparatus.

In some embodiments, the electrolyte includes at least unsaturated cyclic carbonate. Unsaturated cyclic carbonate can form a SEI film on the negative electrode, further improving the cycling performance of the electrochemical apparatus, but it may affect the impedance of the electrochemical apparatus, thereby affecting the low-temperature performance of the electrochemical apparatus. In some embodiments, the unsaturated cyclic carbonate may be at least one of vinylene carbonate (VC) or vinyl ethylene carbonate (VEC).

In some embodiments, based on the total weight of the electrolyte, a weight percentage of the unsaturated cyclic carbonate is d%, 0.1≤d≤4. In some embodiments, 1<d≤3. In some embodiments, d is about 0.1, about 0.25, about 0.3, about 0.5, about 0.8, about 1, about 1.5, about 2, about 3, or about 4, or falls within a range defined by any two of the preceding numerical values.

In some embodiments, based on the total weight of the electrolyte, a weight percentage of the unsaturated cyclic carbonate is d%, and at least one of 1≤b+d≤6 or 0.25≤d/b≤6.5 is satisfied. The electrolyte satisfying at least one of 1≤b+d≤6 or 0.25≤d/b≤6.5 may further improve the cycling performance of the electrochemical apparatus while ensuring the low-temperature performance of the electrochemical apparatus.

In some embodiments, b+d is about 1, about 1.5, about 2, about 2.5, about 3, about 3.5, about 4, about 4.5, about 5, about 5.5, or about 6, or falls within a range defined by any two of the preceding numerical values, for example, from about 1 to about 3, from about 1.5 to about 5, or from about 3 to about 6.

In some embodiments, d/b is about 0.25, about 0.5, about 1, about 1.5, about 2, about 2.5, about 3, about 3.5, about 4, about 4.5, about 5, about 5.5, about 6, or about 6.5, or falls within a range defined by any two of the preceding numerical values, for example, from about 0.25 to about 3, from about 1.5 to about 5, or from about 3 to about 6.5.

In some embodiments, the electrolyte further includes a dinitrile compound, and the dinitrile compound includes at least one of adiponitrile (ADN), succinonitrile (SN), or ethylene glycol bis(2-cyanoethyl) ether (DENE). The dinitrile compound may complex transition metal ions of the positive electrode very well, reduce leaching of the transition metal ions of the positive electrode, suppress oxidation of the electrolyte by the positive electrode, and better improve the high-temperature performance of the electrochemical apparatus. However, if excessive dinitrile compound is added, there is a risk of LiPF₆ precipitation. Therefore, controlling a weight percentage of the dinitrile compound and a ratio of the dinitrile compound to fluoroethylene carbonate may further improve the high-temperature performance of the electrochemical apparatus without causing LiPF₆ precipitation.

In some embodiments, based on the total weight of the electrolyte, a weight percentage of the dinitrile compound is e%, e≤2 and e/b≥0.3.

In some embodiments, e is about 0.1, about 0.5, about 1, about 1.5, or about 2, or falls within a range defined by any two of the preceding numerical values, for example, from about 0.1 to about 0.5, from about 0.5 to about 1, or from about 0.5 to about 2.

In some embodiments, e/b is about 0.3, about 0.5, about 1, about 1.5, about 2, about 3, greater than or equal to about 0.5, greater than or equal to about 1, greater than or equal to about 1.5, greater than or equal to about 2, or the like.

In some embodiments, the electrolyte further includes a trinitrile compound, and the trinitrile compound includes at least one of 1,3,6-hexanetricarbonitrile (HTCN) or 1,2,3-tris (2-cyanoethoxy) propane (TCEP). The trinitrile compound may better improve the high-temperature performance of the electrochemical apparatus, but may cause the impedance of the battery to rise if excessive trinitrile compound is added. Therefore, controlling a weight percentage of the trinitrile compound can further improve the high-temperature performance of the electrochemical apparatus and prevent the low-temperature performance of the electrochemical apparatus from degrading due to too high impedance.

In some embodiments, based on the total weight of the electrolyte, a weight percentage of the trinitrile compound is f%, f<2.5. In some embodiments, f is about 2, about 1.5, about 1, about 0.5, less than or equal to about 2, less than or equal to about 1.5, less than or equal to about 1, less than or equal to about 0.5, or the like.

In some embodiments, the electrolyte further includes a boron-containing lithium salt, and the boron-containing lithium salt includes at least one of lithium difluoroacetate borate (LiDFOB), lithium bisoxalate borate (LiBOB), lithium tetrafluoroborate (LiBF₄), or lithium tetraborate (Li₂B₄O₇), to further ensure both the cycling performance and high- and low-temperature performance of the electrochemical apparatus. If excessive LiDFOB or LiBOB is added, excessive gas is generated by the electrochemical apparatus during high-temperature storage; and if excessive LiBF₄ or Li₂B₄O₇ is added, charge performance of the electrochemical apparatus at low temperatures is affected. Therefore, controlling a weight percentage of the boron-containing lithium salt in the electrolyte can further improve the cycling performance of the electrochemical apparatus while ensuring the high- and low-temperature performance of the electrochemical apparatus.

In some embodiments, based on the total weight of the electrolyte, a weight percentage of the boron-containing lithium salt is g%, g<1. In some embodiments, g is about 0.9, about 0.8, about 0.7, about 0.6, about 0.5, about 0.4, about 0.3, about 0.2, about 0.1, less than or equal to about 0.8, less than or equal to about 0.5, less than or equal to about 0.3, or the like.

In some embodiments, the electrolyte further includes a propynyl compound, and the propynyl compound includes at least one of prop-2-ynyl imidazole-1-carboxylate or carbonic acid methyl 2-propynyl ester, to further improve the high-temperature performance and the cycling performance of the battery. If excessive propynyl compound is added, the impedance of the electrochemical apparatus is affected, thereby affecting the low-temperature performance of the electrochemical apparatus. Therefore, controlling a weight percentage of the propynyl compound in the electrolyte can further improve the high-temperature performance and the cycling performance of the electrochemical apparatus, but does not significantly affect the impedance of the electrochemical apparatus.

In some embodiments, based on the total weight of the electrolyte, a weight percentage of the propynyl compound is h%, h<1. In some embodiments, h is about 0.9, about 0.8, about 0.7, about 0.6, about 0.5, about 0.4, about 0.3, about 0.2, about 0.1, less than or equal to about 0.8, less than or equal to about 0.5, less than or equal to about 0.3, or the like.

In some embodiments, the electrolyte may further include LiPF₆. In some embodiments, based on the total weight of the electrolyte, a weight percentage of the LiPF₆ ranges from 8% to 20%.

### II. Electrochemical apparatus

An embodiment of this application relates to an electrochemical apparatus, including a positive electrode, a negative electrode, a separator provided between the positive electrode and the negative electrode for separation, and the electrolyte according to any one of the embodiments of this application. In some embodiments, the electrochemical apparatus is a lithium-ion battery.

The electrochemical apparatus according to this application may include any apparatus in which an electrochemical reaction takes place. Specific examples of the apparatus include primary batteries or secondary batteries. Particularly, the electrochemical apparatus is a lithium secondary battery, including a lithium metal secondary battery, a lithium-ion secondary battery, a lithium polymer secondary battery, or a lithium-ion polymer secondary battery. In some embodiments, the electrochemical apparatus according to this application includes a positive electrode having a positive electrode active material capable of occluding and releasing metal ions, a negative electrode having a negative electrode active material capable of occluding and releasing metal ions, a separator provided between the positive electrode and the negative electrode, and the electrolyte according to this application.

### Electrolyte

The electrolyte used in the electrochemical apparatus according to this application is any one of the foregoing electrolytes according to this application. In addition, the electrolyte used in the electrochemical apparatus according to this application may also include other electrolytes within the scope without departing from the essence of this application.

### Positive electrode

The positive electrode includes a positive electrode current collector and a positive electrode active material layer applied on the positive electrode current collector, and the positive electrode active material layer contains a positive electrode active material. A higher compacted density of the positive electrode active material layer means fewer pores in the positive electrode active material layer, and makes it more difficult for the electrolyte to infiltrate the electrochemical apparatus. As a result, more ethyl propionate is required in the electrolyte. Therefore, controlling a proportional relationship between an amount of ethyl propionate and a compacted density of the positive electrode active material layer allows the electrochemical apparatus to well ensure both infiltration and high-temperature performance of the electrochemical apparatus.

In some embodiments, a compacted density of the positive electrode active material layer is x g/cm³, 0.5≤a/x≤3. In some embodiments, a/x is about 0.5, about 1, about 1.5, about 2, about 2.5, or about 3, or falls within a range defined by any two of the preceding numerical values, for example, from about 0.5 to about 2, from about 1 to about 2, from about 1.5 to about 3, or from about 1 to 2.8.

In some embodiments, a compacted density of the positive electrode active material layer is x g/cm³, 3.3≤x≤4.5. In some embodiments, x is about 3.3, about 3.5, about 3.8, about 4, about 4.2, or about 4.5, or falls within a range defined by any two of the preceding numerical values.

In some embodiments, a particle size D₅₀ of the positive electrode active material is y µm, 0.1≤y/b≤100. In some embodiments, y/b is about 0.1, about 0.5, about 1, about 5, about 10, about 20, about 30, about 40, about 50, about 60, about 70, about 80, about 90, or about 100, or falls within a range defined by any two of the preceding numerical values, for example, from about 0.1 to about 10, from about 1 to about 50, from about 1 to about 100, or from about 50 to about 100.

In one aspect, a larger particle size of the positive electrode active material makes a specific surface of the positive electrode active material smaller, so that a contact area between the positive electrode active material and the electrolyte is also reduced, and correspondingly the required amount of fluoroethylene carbonate can be reduced as well. In another aspect, a larger particle size of the positive electrode active material makes the ion conduction path longer and the kinetics of the positive electrode active material worse, and the increased polarization increases side reactions on surfaces of the positive and negative electrodes, requiring a larger amount of fluoroethylene carbonate to dynamically repair the SEI film. Therefore, controlling a particle size D₅₀ of the positive electrode active material and the amount of fluoroethylene carbonate to satisfy a specified proportional relationship can compromise impact brought about by the particle size of the positive electrode active material on both the specific surface and the kinetics, obtaining excellent cycling performance of the electrochemical apparatus.

In some embodiments, the positive electrode active material is selected from lithium cobalt oxide (LCO), lithium nickel cobalt manganate (NCM) ternary material, lithium iron phosphate, lithium manganate oxide, or any combinations thereof.

In some embodiments, the positive electrode active material may have a coating layer on its surface, or may be mixed with another compound having a coating layer. The coating layer may include at least one compound of a coating element selected from oxides of the coating element, hydroxides of the coating element, hydroxyl oxides of the coating element, oxycarbonates of the coating element, and hydroxy carbonates of the coating element. The compound used for the coating layer may be amorphous or crystalline.

In some embodiments, the coating element contained in the coating layer may include Mg, Al, Co, K, Na, CA, Si, Ti, V, Sn, Ge, GA, B, As, Zr or any combination thereof. The coating layer can be applied by any method as long as the method does not adversely affect the performance of the positive electrode active substance. For example, the method may include any coating method known in the art, for example, spraying and dipping.

In some embodiments, particles of the positive electrode active material may include a doping element, where the doping element includes Mg, Al, Si, Ti, V, Sn, Ge, GA, B, As, Zr, F or any combination thereof.

The positive electrode active material layer further includes a binder, and optionally includes a conductive material. The binder enhances binding between particles of the positive electrode active substance, and binding between the positive electrode active material and the current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene, polyethylene, polypropylene, styrene-butadiene rubber, acrylic styrene-butadiene rubber, epoxy resin, nylon, or the like.

In some embodiments, the conductive material includes, but is not limited to: a carbon-based material, a metal-based material, a conductive polymer and a mixture thereof. In some embodiments, the carbon-based material is selected from natural graphite, artificial graphite, carbon black, acetylene black, Ketjen black, carbon fiber, carbon nanotube, graphene, or any combination thereof. In some embodiments, the metal-based material is selected from metal powder, metal fiber, copper, nickel, aluminum or silver. In some embodiments, the conductive polymer is a polyphenylene derivative.

In some embodiments, the current collector may be, but is not limited to, aluminum.

The positive electrode can be prepared by a preparation method known in the art. For example, the positive electrode may be obtained by using the following method: mixing the positive electrode active material, the conductive material, and the binder in a solvent to prepare a positive electrode active material composition, and applying the positive electrode active material composition on the current collector. In some embodiments, the solvent may include, but is not limited to, N-methylpyrrolidone and the like.

In some embodiments, the positive electrode is made by forming, on the current collector, a positive electrode material using a positive electrode active material layer including lithium transition metal-based compound powder and a binder.

In some embodiments, the positive electrode active material layer can usually be made by the following operations: dry mixing the positive electrode active material and the binder (a conductive material and a thickener as required) to form a sheet, pressing the obtained sheet to the positive electrode current collector, or dissolving or dispersing these materials in a liquid medium to form a slurry, which is applied on the positive electrode current collector as a coating and dried. In some embodiments, the positive electrode active material layer is made of any material known in the art.

### Negative electrode

The material, composition, and manufacturing method of the negative electrode used in the electrochemical apparatus of this application may include any technology disclosed in the prior art.

In some embodiments, the negative electrode includes a current collector and a negative electrode active material layer on the current collector. In some embodiments, the negative electrode active material layer includes a negative electrode active material. In some embodiments, the negative electrode active material includes, but is not limited to: lithium metal, structured lithium metal, natural graphite, artificial graphite, mesocarbon microbeads (MCMB), hard carbon, soft carbon, silicon, a silicon-carbon composite, a silicon-oxide material, a Li-Sn alloy, a Li-Sn-O alloy, Sn, SnO, SnO₂, spinel structure lithiated TiO₂-Li₄Ti₅O₁₂, a Li-Al alloy or any combination thereof.

In some embodiments, the negative electrode active material layer includes a binder. In some embodiments, the binder includes, but is not limited to: polyvinyl alcohol, carboxymethyl cellulose and its alkali metal compounds, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, polyacrylic acid and its alkali metal compounds, acrylic styrene-butadiene rubber, epoxy resin, or nylon.

In some embodiments, the negative electrode active material layer includes a conductive material. In some embodiments, the conductive material includes, but is not limited to: carbon black, acetylene black, Ketjen black, carbon fiber, carbon nanotube, graphene, metal powder, metal fiber, copper, nickel, aluminum, silver, or polyphenylene derivatives.

In some embodiments, the current collector includes, but is not limited to: copper foil, nickel foil, stainless steel foil, titanium foil, foamed nickel, foamed copper or a polymer base coated with conductive metal.

In some embodiments, the negative electrode may be obtained by using the following method: mixing the active material, the conductive material and the binder in a solvent to prepare an active material composition, and applying the active material composition on the current collector.

In some embodiments, the solvent may include, but is not limited to: deionized water and N-methylpyrrolidone.

### Separator

In some embodiments, the electrochemical apparatus according to this application has a separator provided between the positive electrode and the negative electrode to prevent short circuits. The separator used in the electrochemical apparatus according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a film, or a composite film with a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric or a polypropylene-polyethylene-polypropylene porous composite membrane can be selected.

In some embodiments, at least one surface of the substrate layer is provided with a surface treatment layer, and the surface treatment layer may be a polymer layer or an inorganic substance layer, or a layer formed by mixing a polymer and an inorganic substance.

The inorganic substance layer includes inorganic particles and a binder. The inorganic particles are selected from one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

### III. Electronic apparatus

The electrochemical apparatus according to this application is applicable to electronic apparatuses in various fields.

The electrochemical apparatus according to this application is not particularly limited to any purpose, and may be used for any known purposes in the prior art. In some embodiments, the electrochemical apparatus of this application may be used for, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, an energy storage apparatus, a large household battery, a lithium-ion capacitor, or the like.

### IV. Examples

The following uses a lithium-ion battery as an example and describes preparation of a lithium-ion battery with reference to specific embodiments. A person skilled in the art understands that a preparation method described in this application is only an example, and that all other suitable preparation methods fall within the scope of this application.

### 1. Preparation of a lithium-ion battery

### (1) Preparation of an electrolyte

### Examples 1 to 47

Electrolytes (that is, Electrolytes 1# to 47#) in corresponding examples were prepared in turn based on the following preparation method:

In a common mixed solvent of ethylene carbonate and diethyl carbonate (at a weight ratio of 1:1), substances in each example of Table 1 were mixed well at a corresponding weight ratio according to a preparation method commonly used in the electrolyte industry (where, based on the total weight of the electrolyte, a weight percentage of a lithium salt LiPF₆ was 12.5%), to obtain a corresponding electrolyte in each example.

### Examples 48 to 54

Electrolytes in Example 48 to Example 54 were shown in Table 4.

### Comparative Examples 1 to 7

Electrolytes (that is, Comparative Electrolytes 1# to 7#) in corresponding comparative examples were prepared in turn according to the following preparation method:

In a common mixed solvent of ethylene carbonate and diethyl carbonate (at a weight ratio of 1:1), substances in each example of Table 2 were mixed well at a corresponding weight ratio according to a preparation method common in the electrolyte industry and the same as that in the examples (where, based on the total weight of the electrolyte, a weight percentage of a lithium salt LiPF₆ was 12.5%), to obtain a corresponding electrolyte in each comparative example.

### (2) Preparation of a positive electrode

Lithium cobalt oxide, conductive carbon black, and polyvinylidene fluoride with different particle sizes D₅₀ were mixed at a weight ratio of 96:2:2. N-methylpyrrolidone was added. Then the resulting mixture was stirred well under the action of a vacuum mixer to obtain a positive electrode slurry which was then applied uniformly on an aluminum foil positive electrode current collector. The aluminum foil was dried at 85°C, followed by cold pressing to obtain a corresponding compacted density in each example and comparative example of Table 4, cutting, and slitting, and then was dried under vacuum at 85°C for 4 hours to obtain a positive electrode.

### (3) Preparation of a negative electrode

Artificial graphite, conductive carbon black, sodium carboxymethyl cellulose, and styrene butadiene rubber were mixed at a weight ratio of 96:1:1:2. Deionized water was added. Then, the resulting mixture was stirred under the action of a vacuum mixer to obtain a negative electrode slurry which was then applied uniformly on a copper foil negative electrode current collector. The copper foil was dried at 85°C, followed by cold pressing, cutting, and slitting, and then was dried under vacuum at 120°C for 12 hours to obtain a negative electrode.

### (4) Preparation of a separator

A polyethylene film was used as a separator.

### (5) Preparation of a lithium-ion battery

The positive electrode, the separator, and the negative electrode were stacked in sequence, so that the separator was located between the positive electrode and the negative electrode for separation. Then they were wound to obtain a bare cell. After tabs were welded, the bare cell was placed in an aluminum plastic film shell to obtain a soft package dry cell. The electrolyte in each example and comparative example was injected into the dried dry cell, and a lithium-ion battery was obtained after processes such as vacuum packaging, standing, chemical conversion, shaping, and capacity testing.

### 2. Test method

### (1) Cycling performance test on the lithium-ion battery

The lithium-ion battery was placed in a 25°C thermostat and stood for 30 minutes to bring the lithium-ion battery to a constant temperature. The lithium-ion battery that had reached a constant temperature was charged at a constant current of 1C to a voltage of 4.2 V, charged at a constant voltage of 4.2 V to a current of 0.05C, stood for five minutes, and then discharged at a constant current of 1C to 2.8 V. This was one charge and discharge cycle, and a discharge capacity was recorded. The foregoing charge and discharge cycle was repeated, a discharge capacity for each cycle was recorded, and the number n of cycles was recorded when the discharge capacity decayed to 80% of the initial discharge capacity.

### (2) Low temperature discharge test of the lithium-ion battery

The lithium-ion battery was placed in a 25°C thermostat and stood for 30 minutes to bring the lithium-ion battery to a constant temperature. The lithium-ion battery that had reached a constant temperature was charged at a constant current of 1C to a voltage of 4.2 V, and then charged at a constant voltage of 4.2 V to a current of 0.05C. Then the battery was placed in a refrigerator at -20°C, stood for 4 hours, discharged at a constant current of 0.5C to 2.8 V to obtain a low temperature discharge capacity of the lithium-ion battery. The low temperature discharge capacity was divided by the initial discharge capacity in Test (1) to obtain a capacity retention rate at -20°C and 0.5C.

### (3) High-temperature performance test of the lithium-ion battery

The lithium-ion battery was placed in a 25°C thermostat to bring the lithium-ion battery to a constant temperature. The battery was charged at a constant current of 1C to a voltage of 4.2 V, charged at a constant voltage of 4.2 V to a current of 0.05C. A thickness h₀ of the lithium-ion battery before storage was measured, then the lithium-ion battery was placed in an 85°C thermostat for 24 hours, and a thickness h₁ of the battery after storage was measured at 85°C. A thickness swelling rate after storage at 85°C for 24 hours was calculated as (h₁-h₀)/h₀.

### 3. Parameters and test results of the lithium-ion battery

Table 1 shows electrolyte compositions of Examples 1 to 47, and Table 2 shows electrolyte compositions of Comparative Examples 1 to 7. Table 3 shows electrolyte parameters of Examples 1 to 47 and Comparative Examples 1 to 7. Table 4 shows positive electrode parameters and electrolytes of Examples 1 to 54 and Comparative Examples 1 to 7. Table 5 shows test results of Examples 1 to 54 and Comparative Examples 1 to 7.

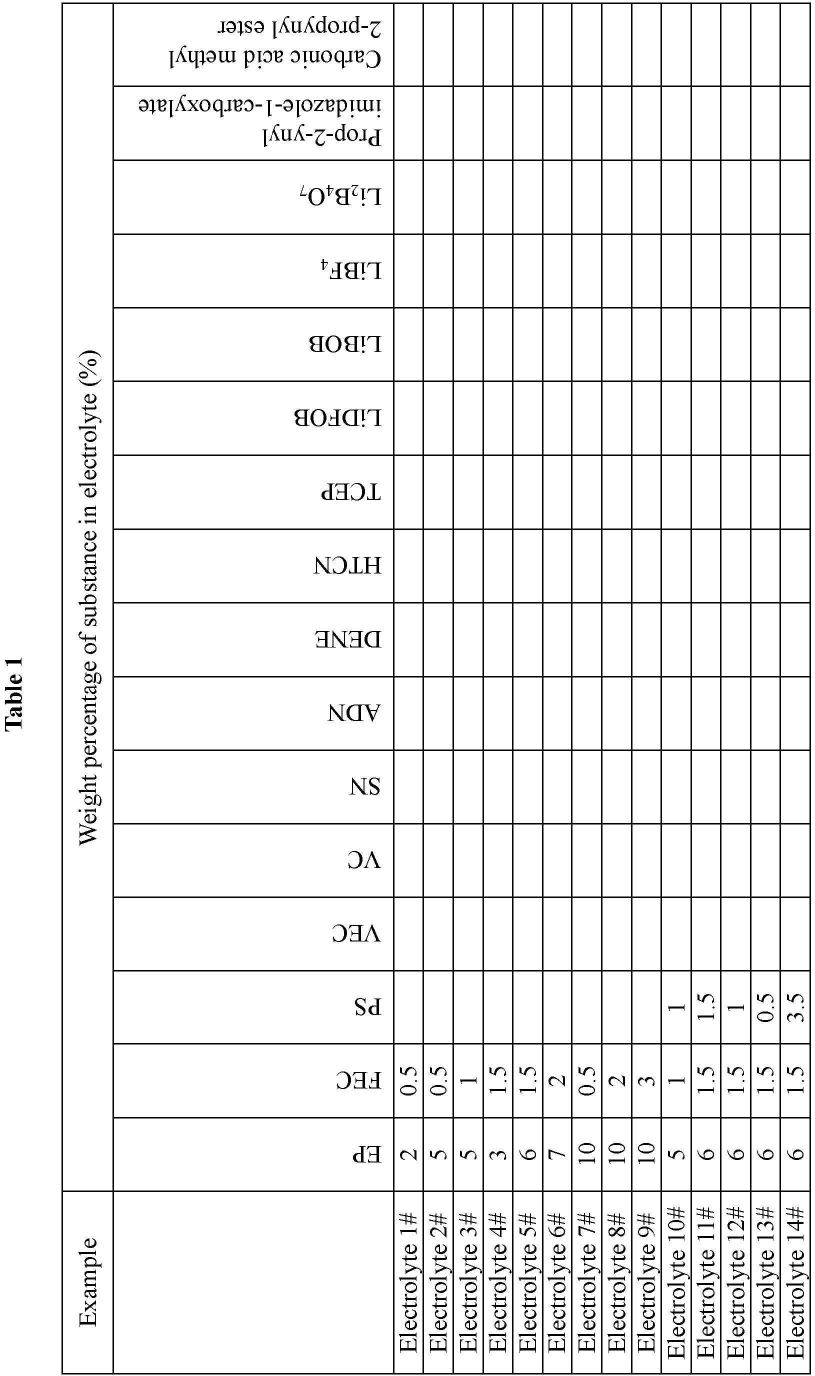

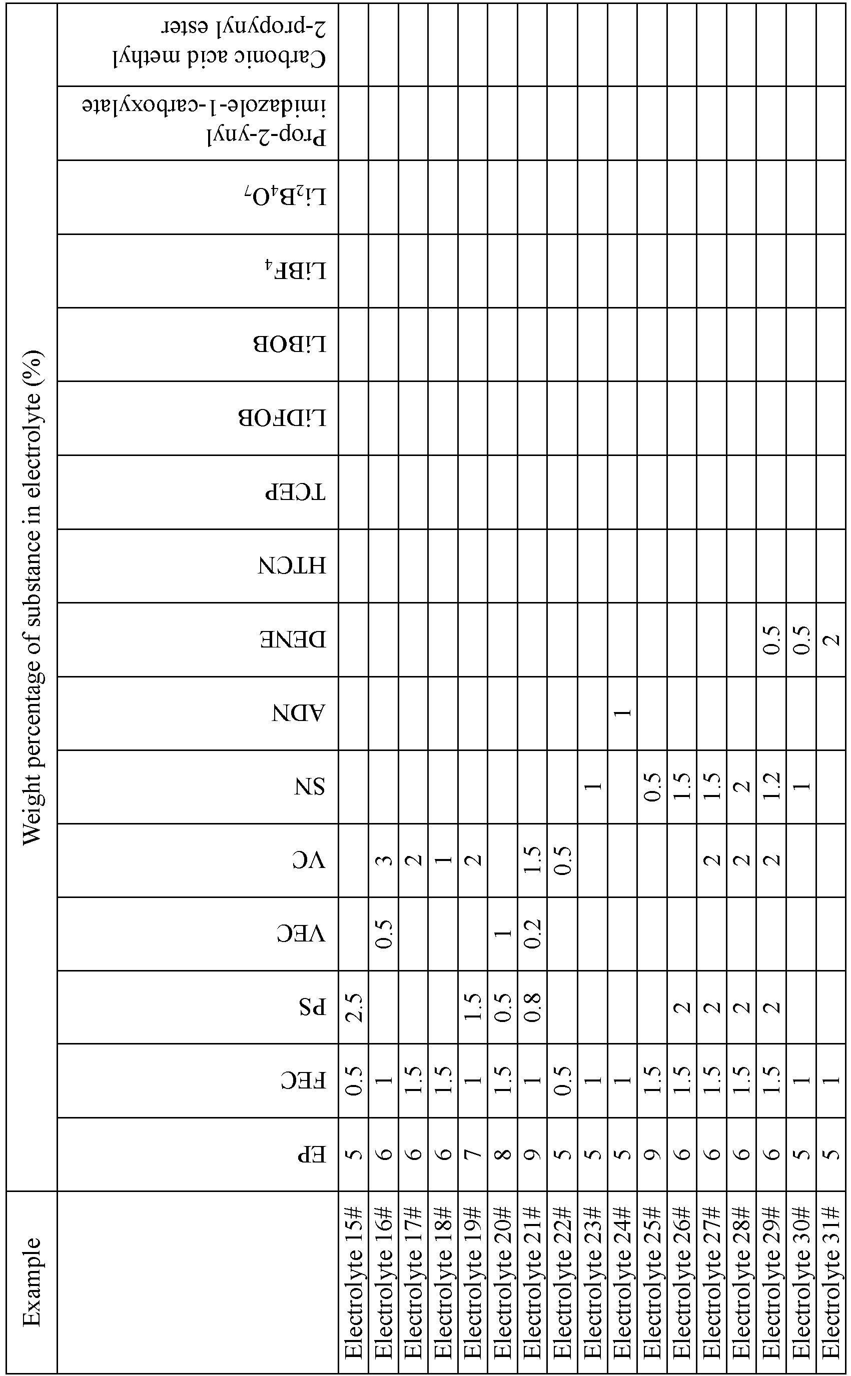

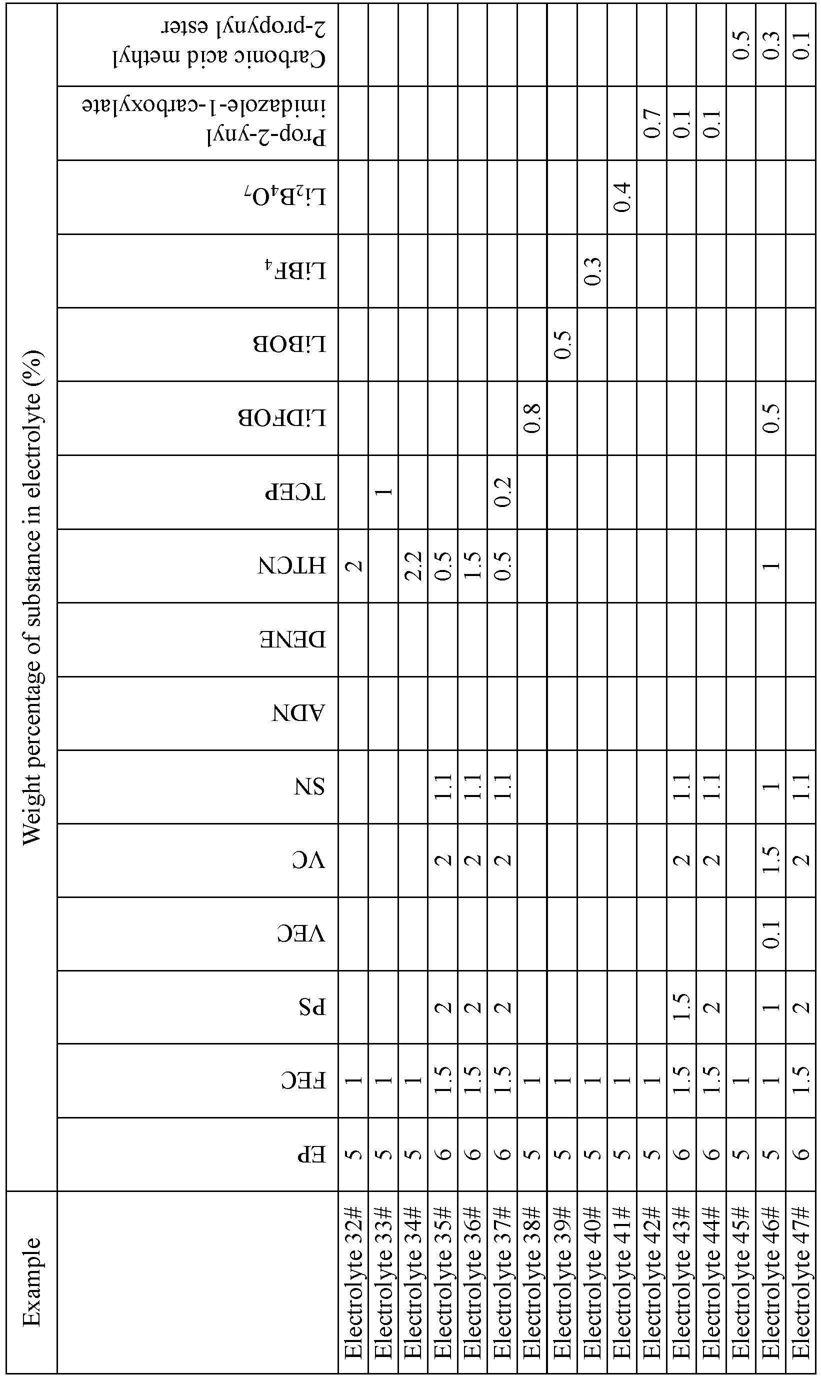

**Table 2**

| Comparative example | | Weight percentage of substance in electrolyte (%) | | | |
|---|---|---|---|---|---|
| | | EP | FEC | VC | PS |
| Comparative Example 1 | Comparative Electrolyte 1# | 5 | | | |
| Comparative Example 2 | Comparative Electrolyte 2# | | 2 | | |
| Comparative Example 3 | Comparative Electrolyte 3# | 5 | | 1 | 1 |
| Comparative Example 4 | Comparative Electrolyte 4# | 15 | 1 | | |
| Comparative Example 5 | Comparative Electrolyte 5# | 5 | 3 | | |
| Comparative Example 6 | Comparative Electrolyte 6# | 11 | 3 | | |
| Comparative Example 7 | Comparative Electrolyte 7# | 9 | 0.08 | | |

**Table 3**

| Electrolyte | a | b/a | a+b | c/b | b+d | d/b | e | e/b | f | g | h |
|---|---|---|---|---|---|---|---|---|---|---|---|
| Electrolyte 1# | 2 | 0.25 | 2.5 | | | | | | | | |
| Electrolyte 2# | 5 | 0.1 | 5.5 | | | | | | | | |
| Electrolyte 3# | 5 | 0.2 | 6 | | | | | | | | |
| Electrolyte 4# | 3 | 0.5 | 4.5 | | | | | | | | |
| Electrolyte 5# | 6 | 0.25 | 7.5 | | | | | | | | |
| Electrolyte 6# | 7 | 0.29 | 9 | | | | | | | | |
| Electrolyte 7# | 10 | 0.05 | 10.5 | | | | | | | | |
| Electrolyte 8# | 10 | 0.2 | 12 | | | | | | | | |
| Electrolyte 9# | 10 | 0.3 | 13 | | | | | | | | |
| Electrolyte 10# | 5 | 0.2 | 6 | 1 | | | | | | | |
| Electrolyte 11# | 6 | 0.25 | 7.5 | 1 | | | | | | | |
| Electrolyte 12# | 6 | 0.25 | 7.5 | 0.67 | | | | | | | |
| Electrolyte 13# | 6 | 0.25 | 7.5 | 0.33 | | | | | | | |
| Electrolyte 14# | 6 | 0.25 | 7.5 | 2.33 | | | | | | | |
| Electrolyte 15# | 5 | 0.1 | 5.5 | 5 | | | | | | | |
| Electrolyte 16# | 6 | 0.17 | 7 | | 4.5 | 3.5 | | | | | |
| Electrolyte 17# | 6 | 0.25 | 7.5 | | 3.5 | 1.33 | | | | | |
| Electrolyte 18# | 6 | 0.25 | 7.5 | | 2.5 | 0.67 | | | | | |
| Electrolyte 19# | 7 | 0.14 | 8 | 1.5 | 3 | 2 | | | | | |
| Electrolyte 20# | 8 | 0.19 | 9.5 | 0.33 | 2.5 | 0.67 | | | | | |
| Electrolyte 21# | 9 | 0.11 | 10 | 0.8 | 2.7 | 1.7 | | | | | |
| Electrolyte 22# | 5 | 0.1 | 5.5 | | 1 | 1 | | | | | |
| Electrolyte 23# | 5 | 0.2 | 6 | | | | 1 | 1 | | | |
| Electrolyte 24# | 5 | 0.2 | 6 | | | | 1 | 1 | | | |
| Electrolyte 25# | 9 | 0.17 | 10.5 | | | | 0.5 | 0.33 | | | |
| Electrolyte 26# | 6 | 0.25 | 7.5 | 1.33 | | | 1.5 | 1 | | | |
| Electrolyte 27# | 6 | 0.25 | 7.5 | 1.33 | 3.5 | 1.33 | 1.5 | 1 | | | |
| Electrolyte 28# | 6 | 0.25 | 7.5 | 1.33 | 3.5 | 1.33 | 2 | 1.33 | | | |
| Electrolyte 29# | 6 | 0.25 | 7.5 | 1.33 | 3.5 | 1.33 | 1.7 | 1.13 | | | |
| Electrolyte 30# | 5 | 0.2 | 6 | | | | 1.5 | 1.5 | | | |
| Electrolyte 31# | 5 | 0.2 | 6 | | | | 2 | 2 | | | |
| Electrolyte 32# | 5 | 0.2 | 6 | | | | | | 2 | | |
| Electrolyte 33# | 5 | 0.2 | 6 | | | | | | 1 | | |
| Electrolyte 34# | 5 | 0.2 | 6 | | | | | | 2.2 | | |
| Electrolyte 35# | 6 | 0.25 | 7.5 | 1.33 | 3.5 | 1.33 | 1.1 | 0.73 | 0.5 | | |
| Electrolyte 36# | 6 | 0.25 | 7.5 | 1.33 | 3.5 | 1.33 | 1.1 | 0.73 | 1.5 | | |
| Electrolyte 37# | 6 | 0.25 | 7.5 | 1.33 | 3.5 | 1.33 | 1.1 | 0.73 | 0.7 | | |
| Electrolyte 38# | 5 | 0.2 | 6 | | | | | | | 0.8 | |
| Electrolyte 39# | 5 | 0.2 | 6 | | | | | | | 0.5 | |
| Electrolyte 40# | 5 | 0.2 | 6 | | | | | | | 0.3 | |
| Electrolyte 41# | 5 | 0.2 | 6 | | | | | | | 0.4 | |
| Electrolyte 42# | 5 | 0.2 | 6 | | | | | | | | 0.7 |
| Electrolyte 43# | 6 | 0.25 | 7.5 | 1 | 3.5 | 1.33 | 1.1 | 0.73 | | | 0.1 |
| Electrolyte 44# | 6 | 0.25 | 7.5 | 1.33 | 3.5 | 1.33 | 1.1 | 0.73 | | | 0.1 |
| Electrolyte 45# | 5 | 0.2 | 6 | | | | | | | | 0.5 |
| Electrolyte 46# | 5 | 0.2 | 6 | 1 | 2.6 | 1.6 | 1 | 1 | 1 | 0.5 | 0.3 |
| Electrolyte 47# | 6 | 0.25 | 7.5 | 1.33 | 3.5 | 1.33 | 1.1 | 0.73 | | | 0.1 |
| Comparative Electrolyte 1# | 5 | | 5 | | | | | | | | |
| Comparative Electrolyte 2# | | | 2 | | | | | | | | |
| Comparative Electrolyte 3# | 5 | | 5 | | | | | | | | |
| Comparative Electrolyte 4# | 15 | 0.07 | 16 | | | | | | | | |
| Comparative Electrolyte 5# | 5 | 0.6 | 8 | | | | | | | | |
| Comparative Electrolyte 6# | 11 | 0.27 | 14 | | | | | | | | |
| Comparative Electrolyte 7# | 9 | 0.009 | 9.08 | | | | | | | | |

**Table 4**

| Example or comparative example | D50 (µm) | y/b | Compacted density (g/cm³) | a/x | Electrolyte |
|---|---|---|---|---|---|
| Example 1 | 5 | 10 | 3.8 | 0.53 | Electrolyte 1# |
| Example 2 | 5 | 10 | 3.8 | 1.32 | Electrolyte 2# |
| Example 3 | 5 | 5 | 3.8 | 1.32 | Electrolyte 3# |
| Example 4 | 5 | 3.33 | 3.8 | 0.79 | Electrolyte 4# |
| Example 5 | 5 | 3.33 | 3.8 | 1.58 | Electrolyte 5# |
| Example 6 | 5 | 2.5 | 3.8 | 1.84 | Electrolyte 6# |
| Example 7 | 5 | 10 | 3.8 | 2.63 | Electrolyte 7# |
| Example 8 | 5 | 2.5 | 3.8 | 2.63 | Electrolyte 8# |
| Example 9 | 5 | 1.67 | 3.8 | 2.63 | Electrolyte 9# |
| Example 10 | 5 | 5 | 3.8 | 1.32 | Electrolyte 10# |
| Example 11 | 5 | 3.33 | 3.8 | 1.58 | Electrolyte 11# |
| Example 12 | 5 | 3.33 | 3.8 | 1.58 | Electrolyte 12# |
| Example 13 | 5 | 3.33 | 3.8 | 1.58 | Electrolyte 13# |
| Example 14 | 5 | 3.33 | 3.8 | 1.58 | Electrolyte 14# |
| Example 15 | 5 | 10 | 3.8 | 1.32 | Electrolyte 15# |
| Example 16 | 5 | 5 | 3.8 | 1.58 | Electrolyte 16# |
| Example 17 | 5 | 3.33 | 3.8 | 1.58 | Electrolyte 17# |
| Example 18 | 5 | 3.33 | 3.8 | 1.58 | Electrolyte 18# |
| Example 19 | 5 | 5 | 3.8 | 1.84 | Electrolyte 19# |
| Example 20 | 5 | 3.33 | 3.8 | 2.11 | Electrolyte 20# |
| Example 21 | 5 | 5 | 3.8 | 2.37 | Electrolyte 21# |
| Example 22 | 5 | 10 | 3.8 | 1.32 | Electrolyte 22# |
| Example 23 | 5 | 5 | 3.8 | 1.32 | Electrolyte 23# |
| Example 24 | 5 | 5 | 3.8 | 1.32 | Electrolyte 24# |
| Example 25 | 5 | 3.33 | 3.8 | 2.37 | Electrolyte 25# |
| Example 26 | 5 | 3.33 | 3.8 | 1.58 | Electrolyte 26# |
| Example 27 | 5 | 3.33 | 3.8 | 1.58 | Electrolyte 27# |
| Example 28 | 5 | 3.33 | 3.8 | 1.58 | Electrolyte 28# |
| Example 29 | 5 | 3.33 | 3.8 | 1.58 | Electrolyte 29# |
| Example 30 | 5 | 5 | 3.8 | 1.32 | Electrolyte 30# |
| Example 31 | 5 | 5 | 3.8 | 1.32 | Electrolyte 31# |
| Example 32 | 5 | 5 | 3.8 | 1.32 | Electrolyte 32# |
| Example 33 | 5 | 5 | 3.8 | 1.32 | Electrolyte 33# |
| Example 34 | 5 | 5 | 3.8 | 1.32 | Electrolyte 34# |
| Example 35 | 5 | 3.33 | 3.8 | 1.58 | Electrolyte 35# |
| Example 36 | 5 | 3.33 | 3.8 | 1.58 | Electrolyte 36# |
| Example 37 | 5 | 3.33 | 3.8 | 1.58 | Electrolyte 37# |
| Example 38 | 5 | 5 | 3.8 | 1.32 | Electrolyte 38# |
| Example 39 | 5 | 5 | 3.8 | 1.32 | Electrolyte 39# |
| Example 40 | 5 | 5 | 3.8 | 1.32 | Electrolyte 40# |
| Example 41 | 5 | 5 | 3.8 | 1.32 | Electrolyte 41# |
| Example 42 | 5 | 5 | 3.8 | 1.32 | Electrolyte 42# |
| Example 43 | 5 | 3.33 | 3.8 | 1.58 | Electrolyte 43# |
| Example 44 | 5 | 3.33 | 3.8 | 1.58 | Electrolyte 44# |
| Example 45 | 5 | 5 | 3.8 | 1.32 | Electrolyte 45# |
| Example 46 | 5 | 5 | 3.8 | 1.32 | Electrolyte 46# |
| Example 47 | 5 | 3.33 | 3.8 | 1.58 | Electrolyte 47# |
| Example 48 | 52 | 104 | 3.8 | 1.32 | Electrolyte 2# |
| Example 49 | 30 | 60 | 3.8 | 1.32 | Electrolyte 2# |
| Example 50 | 15 | 30 | 3.8 | 1.32 | Electrolyte 2# |
| Example 51 | 0.04 | 0.08 | 3.8 | 1.32 | Electrolyte 2# |
| Example 52 | 5 | 10 | 3.5 | 1.43 | Electrolyte 2# |
| Example 53 | 5 | 10 | 4.2 | 0.47 | Electrolyte 1# |
| Example 54 | 5 | 10 | 4.0 | 0.5 | Electrolyte 1# |
| Comparative Example 1 | 5 | - | 3.8 | 1.32 | Comparative Electrolyte 1# |
| Comparative Example 2 | 5 | 2.5 | 3.8 | 0 | Comparative Electrolyte 2# |
| Comparative Example 3 | 5 | - | 3.8 | 1.32 | Comparative Electrolyte 3# |
| Comparative Example 4 | 5 | 5 | 3.8 | 3.95 | Comparative Electrolyte 4# |
| Comparative Example 5 | 5 | 1.67 | 3.8 | 1.32 | Comparative Electrolyte 5# |
| Comparative Example 6 | 5 | 1.67 | 3.8 | 2.89 | Comparative Electrolyte 6# |
| Comparative Example 7 | 5 | 62.5 | 3.8 | 2.37 | Comparative Electrolyte 7# |

**Table 5**

| Battery number | Number of cycles (n) | Capacity retention rate at - 20°C and 0.5C (%) | Thickness swelling rate after storage at 85°C for 24 hours (%) |
|---|---|---|---|
| Example 1 | 921 | 72 | 2.1 |
| Example 2 | 935 | 75 | 2.7 |
| Example 3 | 970 | 77 | 3.5 |
| Example 4 | 1002 | 77 | 4.5 |
| Example 5 | 985 | 78 | 4.7 |
| Example 6 | 1051 | 79 | 4.9 |
| Example 7 | 963 | 81 | 5.2 |
| Example 8 | 1039 | 82 | 6.0 |
| Example 9 | 1088 | 81 | 8.6 |
| Example 10 | 983 | 74 | 2.0 |
| Example 11 | 996 | 73 | 2.5 |
| Example 12 | 994 | 74 | 3.0 |
| Example 13 | 990 | 76 | 3.8 |
| Example 14 | 1001 | 68 | 1.1 |
| Example 15 | 985 | 71 | 1.5 |
| Example 16 | 1125 | 66 | 2.8 |
| Example 17 | 996 | 68 | 2.2 |
| Example 18 | 1022 | 75 | 3.9 |
| Example 19 | 1107 | 71 | 1.8 |
| Example 20 | 1081 | 73 | 1.9 |
| Example 21 | 1098 | 77 | 1.9 |
| Example 22 | 971 | 70 | 2.5 |
| Example 23 | 980 | 75 | 3.8 |
| Example 24 | 985 | 76 | 2.0 |
| Example 25 | 1089 | 80 | 4.0 |
| Example 26 | 1105 | 71 | 1.7 |
| Example 27 | 1155 | 67 | 1.6 |
| Example 28 | 1165 | 66 | 1.5 |
| Example 29 | 1178 | 69 | 1.1 |
| Example 30 | 988 | 78 | 2.3 |
| Example 31 | 997 | 77 | 1.8 |
| Example 32 | 1025 | 77 | 1.5 |
| Example 33 | 1021 | 76 | 1.4 |
| Example 34 | 996 | 78 | 2.1 |
| Example 35 | 1175 | 67 | 1.5 |
| Example 36 | 1215 | 65 | 1.3 |
| Example 37 | 1190 | 66 | 1.3 |
| Example 38 | 1138 | 83 | 2.8 |
| Example 39 | 1127 | 78 | 3.1 |
| Example 40 | 982 | 81 | 1.7 |
| Example 41 | 996 | 85 | 1.6 |
| Example 42 | 1011 | 75 | 1.2 |
| Example 43 | 1143 | 70 | 2.2 |
| Example 44 | 1159 | 69 | 1.7 |
| Example 45 | 1008 | 75 | 1.3 |
| Example 46 | 1268 | 78 | 1.9 |
| Example 47 | 1161 | 69 | 1.6 |
| Example 48 | 817 | 62 | 1.0 |
| Example 49 | 889 | 69 | 1.5 |
| Example 50 | 920 | 75 | 2.0 |
| Example 51 | 825 | 90 | 7.9 |
| Example 52 | 1053 | 87 | 2.8 |
| Example 53 | 873 | 67 | 2.5 |
| Example 54 | 875 | 68 | 2.0 |
| Comparative Example 1 | 325 | 60 | 11.2 |
| Comparative Example 2 | 804 | 55 | 6.2 |
| Comparative Example 3 | 787 | 50 | 3.0 |
| Comparative Example 4 | 977 | 87 | 13.1 |
| Comparative Example 5 | 1038 | 73 | 11.6 |
| Comparative Example 6 | 1096 | 82 | 10.5 |
| Comparative Example 7 | 498 | 78 | 9.8 |

It can be seen from Table 2 and Table 5 that the electrolyte in Comparativ Example 1 added with ethyl propionate instead of fluoroethylene carbonate showed poor cycling performance, poor high-emperature performance and low-temperature performance; the electrolyte in Comparative Example 2 added with fluoroethylene carbonate instead of ethyl propionate showed relatively poor low temperature and high-temperature performance; the electrolyte in Comparative Example 3 added with ethyl propionate added instead of fluoroethylene carbonate also showed relatively poor cycling performance and low-temperature performance; the electrolytes in Comparative Example 4 and Comparative Example 6 added with ethyl propionate and fluoroethylene carbonate showed significantly improved low-temperature performance, but the high-temperature storage thickness swelling rate of the electrochemical apparatus deteriorated because a weight percentage of the ethyl propionate was greater than 10%; and the electrolyte in Comparative Example 5 with a ratio of fluoroethylene carbonate to ethyl propionate greater than 0.5 (b/a = 0.6) also showed high-temperature storage thickness swelling rate deterioration. Generally, a thickness swelling rate greater than 10% was considered unacceptable for the lithium-ion battery. Therefore, the lithium-ion batteries in Comparative Examples 1 and 4 to 6 were unacceptable due to their swelling rates. The electrolyte in Comparative Example 7 with a ratio of fluoroethylene carbonate to ethyl propionate less than 0.01 (b/a = 0.009) showed relatively poor cycling performance and a relatively high high-temperature storage thickness swelling rate.

It can be learned from comparison between Examples 1 to 54 and Comparative Examples 1 to 7 that, the lithium-ion batteries in the examples of this application all had a swelling rate less than 10%, and had excellent cycling performance and high- and low-temperature performance. Therefore, the lithium-ion batteries in the examples of this application could ensure both the cycling performance and high- and low-temperature performance of the lithium-ion batteries. It can be learned from comparison between Example 2 and Example 48 that, y/b≤100 was satisfied in Example 2, and therefore Example 2 further improved the cycling performance and the low-temperature performance compared with Example 48. It can be learned from comparison between Example 2 and Example 51 that, y/b≥0.1 was satisfied in Example 2, and therefore Example 2 further improved the cycling performance and the high-temperature performance compared with Example 51.

It can be learned from comparison between Examples 48 to 51 that, 0.1≤y/b≤100 was satisfied in both Example 49 and Example 50, and therefore Example 49 and Example 50 had better overall performance than Example 48 and Example 51.

It can be learned from comparison between Example 1 and Example 53 that, the positive electrode active material layer in Example 53 had a compacted density increased to 4.2 g/cm³, and after being combined with Electrolyte 1#, the positive electrode active material layer has a/x<0.5, providing lower cycling performance and low-temperature performance than Example 1, but still significantly better overall performance than Example 1. Therefore, the positive electrode active material layer in Example 53 can help to keep performance of the electrochemical apparatus stable under a condition of a high compacted density.

The electrolyte in this application can ensure to a large extent both the cycling performance and high- and low-temperature performance of the lithium-ion battery.

The electrochemical apparatus in this application can have excellent cycling performance and high- and low-temperature performance.

References to "some embodiments", "some of the embodiments", "an embodiment", "another example", "examples", "specific examples", or "some examples" in the specification mean the inclusion of specific features, structures, materials, or characteristics described in at least one embodiment or example of this application in the embodiment or example. Therefore, descriptions in various places throughout the specification, such as "in some embodiments", "in the embodiments", "in an embodiment", "in another example", "in an example", "in a specific example", or "examples", do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrolyte, comprising ethyl propionate and fluoroethylene carbonate, wherein based on a total weight of the electrolyte, a weight percentage of ethyl propionate is a%, and a weight percentage of fluoroethylene carbonate is b%, and 0<a≤10 and 0.01<b/a≤0.5 are satisfied.

2. The electrolyte according to claim 1, wherein the electrolyte further satisfies 4≤a+b≤15.

3. The electrolyte according to claim 1, wherein the electrolyte further comprises at least one of 1,3-propane sultone or unsaturated cyclic carbonate.

4. The electrolyte according to claim 3, wherein when the electrolyte comprises 1,3-propane sultone, based on the total weight of the electrolyte, a weight percentage of 1,3-propane sultone is c%, and 0.25≤c/b≤5 is satisfied; and when the electrolyte comprises the unsaturated cyclic carbonate, based on the total weight of the electrolyte, a weight percentage of the unsaturated cyclic carbonate is d%, and at least one of 1≤b+d≤6 or 0.25≤d/b≤6.5 is satisfied.

5. The electrolyte according to claim 1, wherein the electrolyte further comprises a dinitrile compound, and the dinitrile compound comprises at least one of adiponitrile, succinonitrile, or ethylene glycol bis(2-cyanoethyl) ether, wherein based on the total weight of the electrolyte, a weight percentage of the dinitrile compound is e%, and e≤2 and e/b≥0.3 are satisfied.

6. The electrolyte according to claim 1, wherein the electrolyte further comprises a trinitrile compound, and the trinitrile compound comprises at least one of 1,3,6-hexanetricarbonitrile or 1,2,3-tris (2-cyanoethoxy) propane, wherein based on the total weight of the electrolyte, a weight percentage of the trinitrile compound is f%, and f<2.5 is satisfied.

7. The electrolyte according to claim 1, wherein the electrolyte further comprises a boron-containing lithium salt, and the boron-containing lithium salt comprises at least one of lithium difluoroacetate borate, lithium bisoxalate borate, lithium tetrafluoroborate, or lithium tetraborate, wherein based on the total weight of the electrolyte, a weight percentage of the boron-containing lithium salt is g%, and g<1 is satisfied.

8. The electrolyte according to claim 1, wherein the electrolyte further comprises a propynyl compound, and the propynyl compound comprises at least one of prop-2-ynyl imidazole-1-carboxylate or carbonic acid methyl 2-propynyl ester, wherein based on the total weight of the electrolyte, a weight percentage of the propynyl compound is h%, and h<1 is satisfied.

9. An electrochemical apparatus, comprising a positive electrode, a negative electrode, a separator and the electrolyte according to any one of claims 1 to 8.

10. The electrochemical apparatus according to claim 9, wherein the positive electrode comprises a positive electrode current collector and a positive electrode active material layer applied on the positive electrode current collector, and the positive electrode active material layer comprises a positive electrode active material, wherein a compacted density of the positive electrode active material layer is x g/cm³, and 0.5≤a/x≤3 is satisfied.

11. The electrochemical apparatus according to claim 10, wherein a particle size D₅₀ of the positive electrode active material is y µm, and 0.1≤y/b≤100 is satisfied.

12. An electronic apparatus, comprising the electrochemical apparatus according to any one of claims 9 to 11.
